# EUROPEAN PATENT APPLICATION

(11) **EP 2 743 817 A1**
(43) Date of publication of application: **18.06.2014**
(21) Application number: 12250179.4
(22) Date of filing: 12.12.2012
(51) Int. Cl.: G06F 3/0488, G06F 3/0482

(54) **Touch screen device for handling lists**

(71) Applicant: British Telecommunications public limited company, London EC1A 7AJ (GB)
(72) Inventor: The designation of the inventor has not yet been filed
(74) Representative: Cardus, Alan Peter

(57) **Abstract**

A touch screen device comprises a touch-screen controller configured to detect a touch on a touch sensitive display and to detect movement across a part of the touch sensitive display of the touch; a display controller configured to display graphical elements on the touch sensitive display and a processor configured to, in response to detection of movement of the touch: determine a first graphical element displayed on the touch sensitive display in a position corresponding to the part of the touch sensitive display across which the movement of the touch is detected; determine a position on the display for a second graphical element in relation to the position on the display of the first graphical element; and modify the display by adding the second graphical element at the determined position.

## Description

The present invention concerns devices comprising a touch sensitive display.

There exist many styles of input interface for performing operations with a computer-related device. Of particular interest are devices having a touch sensitive screen or "touch screen" display. With such displays, a user may interact with the device by simply touching the display. Often, different parts of the display are associated with different computer-related operations, which operations are indicated by a graphic symbols, such as a letters, words, numerals or icons. The position in the display of the graphic symbol is usually the position at which a user touch will cause the operation associated with that symbol to be performed. This arrangement is helpful because it naturally guides the user to touch the screen in the correct position for a given operation. However, features of a device user interface (UI) may not be optimized for touch screen operation. At present the insertion of an element into an existing list displayed on a user interface is usually implemented by user selection of an existing item followed by user selection of an "add" button, pop-up menu or similar. This mode of operation, based on conventional computer keyboard and mouse user interface, is not optimum for touch-screen user interface devices.

The invention provides an improved method of operating a touch screen user interface device that is more intuitive for the user for insertion of a graphical element on the display.

In a method of operating a device comprising a touch sensitive display, in which the method comprises: detecting a touch on the touch sensitive display and detecting movement of the touch across a part of the touch sensitive display; in response to detecting the movement of the touch, determining a first graphical element displayed on the touch sensitive display in a position corresponding to the part of the touch sensitive display across which the movement of the touch is detected and adding to the touch sensitive display a second graphical element; in which the position on the touch sensitive display of the second graphical element is determined in relation to the position on the touch sensitive display of the first graphical element.

The part of the display across which the movement is detected may correspond to the position on the display of an existing graphical element. The new element is then added in a position related to the position of the existing element. For example, the new element may be added immediately above the location on the display of a graphical element within which the movement is detected. This eliminates the need to provide an "add" button or for a pop-up menu to be activated on the user interface. Activation of an "add" button or for a pop-up menu can be inconvenient for the user of the device, requiring repositioning of the finger to select the correct button or menu item and can lead to errors which result in undesired operation of the device. Optionally, the user interface immediately allows the user to start entering text in the newly-created element. The invention provides a user interface that is slicker and more intuitive for the user.

According to various embodiments, the first graphical element corresponds to an item of a list of items displayed on the touch sensitive display and the method comprises detecting movement of the touch across a part of the display displaying the list of items; and introducing a new item into the list by adding the second graphical element on the touch sensitive display. Also, where the first graphical element corresponds to an item of a list of items, the method comprises introducing a new item into the list by adding the second graphical element in a position in the list determined in relation to the position of the item.

The invention provides an improved touch sensitive user interface suitable for touch screen devices that is more intuitive for the user for insertion of a graphical element on the display.

A device comprising: a touch sensitive display; a touch-screen controller configured to detect a touch on the touch sensitive display and to detect movement across a part of the touch sensitive display of the touch; a display controller configured to display graphical elements on the touch sensitive display; and a processor configured, in response to detection of movement of the touch: to determine a first graphical element displayed on the touch sensitive display in a position corresponding to the part of the touch sensitive display across which the movement of the touch is detected; to determine a position on the display for a second graphical element in relation to the position on the display of the first graphical element; and to modify the display by adding the second graphical element at the determined position.

According to various embodiments, the first graphical element is comprised in a list of items and the position on the display of the second graphical element corresponds to a position in the list. Also, where the list is a structured list comprising items arranged in at least two hierarchical levels, the position of the second graphical element corresponds to the same hierarchical level as the item.

### Brief Description of the Drawings

In order to aid understanding, embodiments of the invention will now be described by way of example with reference to the drawings in which:
Figures 1, 2b, 3a, 3b, 4a, 4b and 5a to 5c show a device and touch-screen display to variously illustrate embodiments of the invention;
Figure 2a shows a schematic block diagram indicating the major components of a device according to further embodiments of the invention.

### Detailed Description of Embodiments

According to the present invention, to add a new element to the display, the user touches the display by making contact using a finger and drags the finger across a part of the display (in reality, the user may use a finger, stylus or similar object to make contact with the display but, for simplicity, all these options are indicated herein by the term "finger"). At this point the user interface detects movement of the touch across the display and adds a new element to the display.

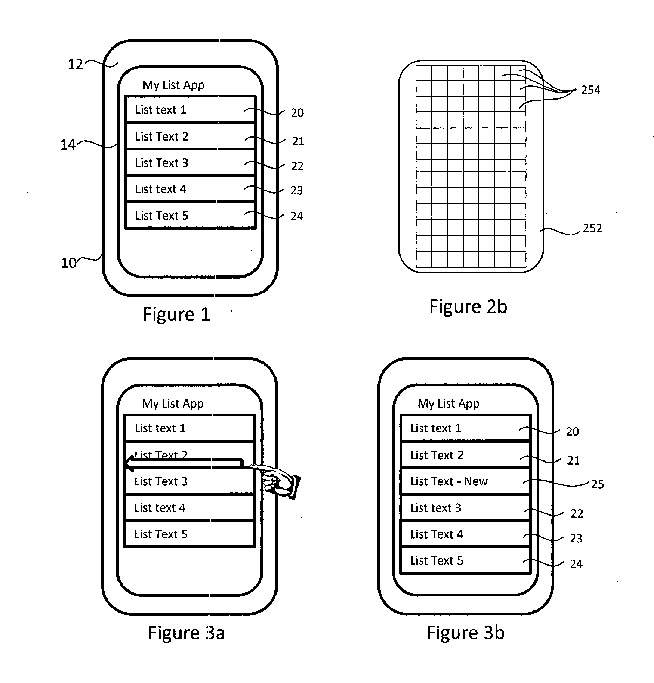

Figure 1 shows a communications device 10, such as a smart phone, having a front panel 12 to which there is mounted a touch sensitive display 14. By way of example, an app "My List App" is shown on display 14. The My List App UI comprises a series of graphic boxes 20-24 arranged in a column, with each box representing a different entry in a list, e.g. List Text 1, List Text 2, etc. By way of example, a list may comprise a set of entries in a to-do list or in a contact database. One of the list elements may be selected by e.g. double-clicking in the area occupied by the list element. Selection of an element may result in more details being displayed or changing to a data-entry mode. Arrangement of graphic boxes in a column is not an essential element of the invention, for example, according to an alternative embodiment, a list may comprise a series of graphic boxes arranged as a row or in a matrix arrangement.

There are several ways to construct a touch screen display suitable for use in the present invention but probably the most common are capacitive and resistive technologies, each of which involves creating one or more transparent conductive layer above or integrated with the display. The present invention may be implemented on any one of a vast number of commercially available devices supplied with a touch screen user interface. These typically include a touch panel which is generally clear with a touch sensitive surface. The touch panel is positioned in front of a display screen so that the touch sensitive surface covers the viewable area of the display screen. The touch panel registers touch events and sends these signals to a controller. The controller processes these signals and in response to the processed signals performs various tasks such as generating images for display. In this way, a user can select a task for the device to perform by simply touching the surface of the touch sensitive screen with one or more finger, stylus or similar object. In general, the touch sensitive screen recognizes the touch, which allows the device to perform an operation based on the position of the touch.

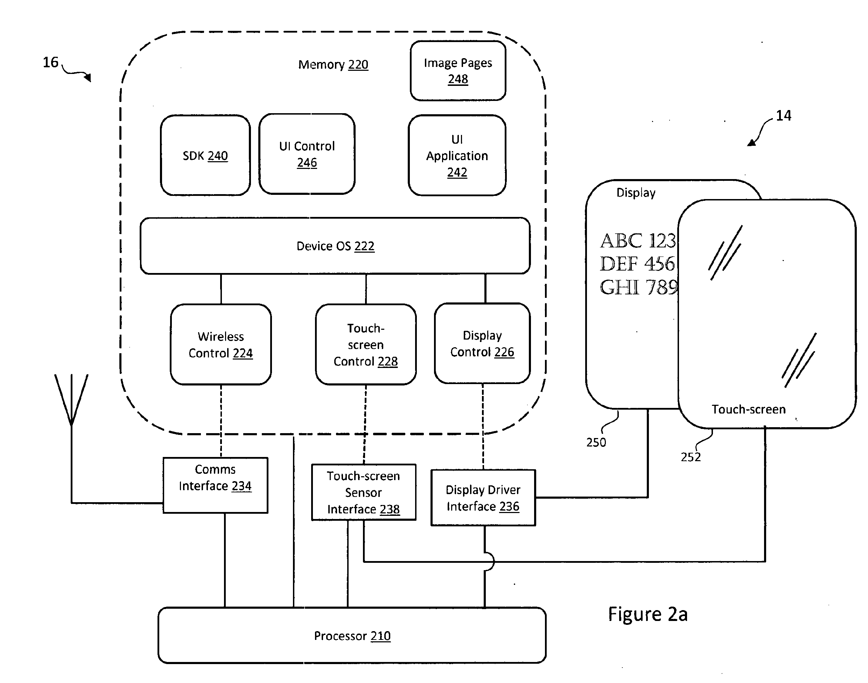

As shown schematically in Figure 2a, an operational circuit 16 is provided for controlling the communications device, including controlling touch sensitive display 14, in response to touch events in which the user touches the display. As shown in Figure 2a, display 14 has an image-generating layer 250 for generating a visible image, hereinafter referred to as a page. Typically, the image-generating layer 250 will be formed by an array of light-emitting diodes, although rather than being light-emitting, the display could rely on differences in reflectivity to form an image. Positioned adjacent the image-generating layer, a touch-sensitive layer 252 (shown offset in Figure 2a for reasons of clarity) is provided for sensing a user's touch. Touch-sensitive layer 252 is arranged such that it lies directly in front of image generating layer 250 when the display 14 is facing the user. Touch-sensitive layer 252 is sufficiently transparent for the page generated by the image generating layer 250 to be visible through the touch sensitive layer.

As shown schematically in Figure 2b, which is not intended to be to scale, touch-sensitive layer 252 has an array of touch pixels (a few of which are indicated at 254), whose position can be defined by x-y co-ordinates. Each touch pixel is provided with a touch sensor that is individually responsive to user touch over the pixel area (the touch sensors may be resistive, capacitive, or even optical). When contact is made with a particular touch pixel, the touch sensitive layer is arranged to generate and send to operational circuit 16 a touch signal indicative of the x-y co-ordinate position of the pixel touched.

Referring again to Figure 2a, the main functional elements of the operational circuit comprise a processor 210 operationally coupled to both the display 14 and to a memory 220. Device controller interface hardware 234 is provided for transmitting and receiving communications traffic under control of processor 210. The device controller interface may be a PSTN (Public Switched Telephone Network) interface for generating and receiving PSTN signals, or if the communications device is a cellular telephone, the device controller interface may include a wireless transceiver connected to an antenna for wireless communications. Display driver interface hardware 236 is connected to image-generating layer 250 for the display of graphical elements (which may comprise fields of one or more of text, graphics and images) under control of processor 210. Touch screen sensor interface hardware 238 is connected to touch screen 252 for processing touch signals under control of processor 210. As used herein, the term processor broadly refers to a computing device such as a microcontroller, microprocessor, a microcomputer, a programmable logic controller, an application specific integrated circuit, and any other programmable circuit with the capacity to execute a stored program.

Memory 220 has stored therein a plurality of image pages 248 for display on display 14. In association with a given image, there is also stored a mapping that relates positions in the image with respective user input instructions. For example, the mapping may associate a user input instruction with a particular graphical element occupying part of the display. Processor 210 operates under the control of computer software, here operating system 222 and software modules 224, 226, 228, 240, 242 and 246, which provide instructions for controlling various aspects of the operation of communication device 10, such as transmitting or receiving calls, and the display of graphical elements.

The device software may be considered as a number of components layers, as follows: at the lowest level device operating system OS 222 interfacing with the device controller software modules 224, 226 and 228; SDK 240; UI Control 246; and UI Application 242. As indicated by dashed lines in Figure 2a, device controller software modules 224, 226 and 228 function to control hardware interfaces 234, 236 and 238 as follows. Wireless control software module 224 controls operation of communications interface hardware 234 for sending and receiving communications via an external communications medium such as the PSTN or wireless networks. Display control software module 226 controls operation of display driver interface hardware 236 to control the display of graphical elements on image-generating layer 250. Touch screen control software module 228 controls operation of touch screen sensor interface hardware 238 to process touch signals received from touch screen 252.

SDK 240 comprises device software, conventionally provided by the device manufacturer, which allows developers access to low-level software functions supported by the device. According to the current embodiment, SDK 240 provides interfaces (APIs) for interaction by UI Application 242 with the low-level device software functions.

UI control 246 is a core device function, which is exposed to UI application 242 via the above-mentioned SDK-provided APIs. UI control 246 "listens" for input from the user of the device, i.e. where the user is interacting with display 14. UI control 246 translates physical contact and movement on touch screen 252 detected by touch screen sensor interface hardware 238 under control of touch screen control software module 228 into software API calls in SDK 240. This allows the user to exercise, through touch sensitive display 14, control over operation of the device. UI application 242 works via SDK 240 with UI control 246 to process detected touch-screen events and to determine what actions to take in response. UI application 242 works with UI Control 246 to enable a "slide to insert" function and the corresponding addition of new list items.

UI Application 242 comprises code to extend standard control features to deliver a working implementation of the invention. From the position on the display of the detected movement, the location for insertion of a new element may be derived (e.g. the location of a new element may be expressed in terms of the identities of the existing displayed elements between which or adjacent which a new element is to be inserted).

In order to introduce additional functionality according to the present invention, UI application 242 is installed on the device. UI application 242 is a software application that supports the user interface and provides the user with an ability to control and manipulate the display of graphical elements, e.g. comprised in a list. UI application 242 and the UI it supports are coded using device SDK 240 with suitable code SDK extensions. UI application 242 creates and maintains the list items and cooperates with device SDK 240 to obtain information on detected touch-screen events, i.e. specific touches and movements of touches across the display. UI application 242 may, typically, be deployed onto an individual device by means of a software update.

UI application 242 monitors UI control 246 for specific touch events. According to an embodiment, UI application 242 monitors UI control 246 for a dynamic touch event, i.e. a sequence of contact points across a contiguous set of touch pixels corresponding to the user sliding a finger across the surface of touch screen 252. The detected movement may be interpreted as a gesture embodying a command on the part of the user. UI application 242 can then determine if a detected event indicates a valid operation to perform on the list. If the indicated operation is valid, UI application 242 can then determine how the user wishes to modify the list. For example, Figure 3a shows movement of a touch directed across element 21 (ListText 2) in a list of items 20-24 displayed on display 14. If UI control 246 reports a movement, similar to that represented by the arrow adjacent to and substantially parallel to the lower edge of element 21, then UI application 242 will, according to an embodiment, interpret that movement as a user command to carry out an operation to insert a new list element immediately below element 21, i.e. between elements 21 (ListText 2) and 22 (ListText 3). Note that element 21 is not displaced to follow the movement of the finger, that is, no attempt is made to simulate element 21 being dragged across the screen by the user. Rather, movement is detected within element 21 and relative to element 21. Accordingly, UI application 242 will then respond to the interpreted user command by inserting new list element 25 between elements 21 and 22, as shown in Figure 3b. UI Application software module 242 retrieves an appropriate image or set of images from plurality of image pages 248 and provides them to display control software module 226, which updates display 14.

We now describe, in more detail with reference to Figures 3a-3b, an operation to add an element. As shown in Figure 3a, to add a new element in the displayed list between List Text 2 and List Text 3, the user drags a finger across the bottom of the graphic box labelled List Text 2. This is detected as a dynamic touch by processor 210 executing touch screen control software module 228. Having established the position on the display of the dynamic touch, a new "insert" operation can be performed. Moving to Figure 3b, at this point processor 210, executing UI control software module 246 and UI application software module 242, adds, via display control software module 226 and display driver interface hardware 236, a new element (i.e. new graphic box 25) at the location indicated by the dynamic touch, i.e. between List Text 2 and List Text 3 and (optionally) allows the user to start entering text into the new element. Optionally, the new list item may be automatically initialised for text entry.

Figures 3a and 3b represent a new element being inserted into a gap in the displayed list, where the gap is introduced by shifting existing items in the list. According to alternative implementations, a new element may simply be inserted in place of one or more existing elements - i.e. by replacing the existing element or elements with the new element.

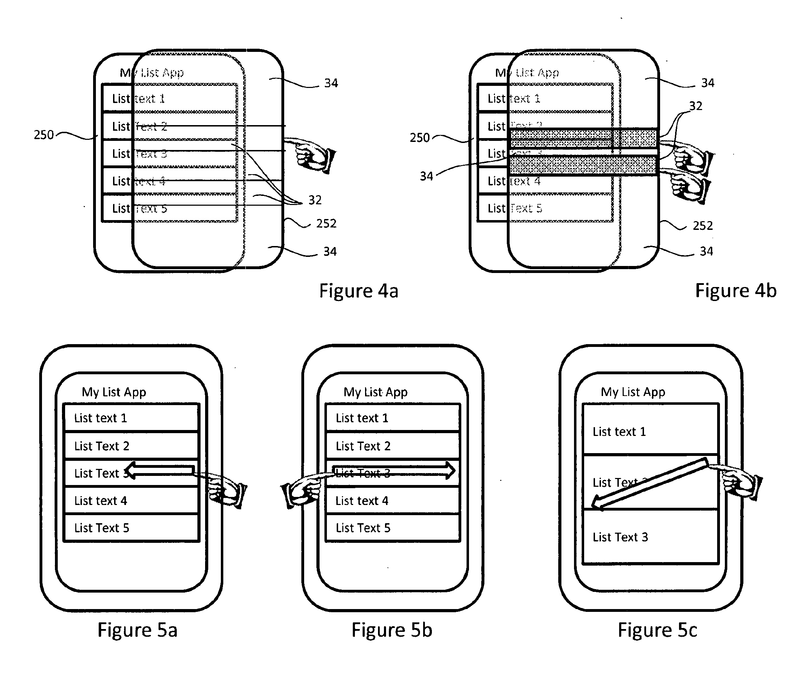

Processor 210 is arranged to interpret the touch signals transmitted by display 14 in dependence on the image currently being displayed on image-generating layer 250. This is done by retrieving the mapping associated with the image currently displayed, and, for a given touch signal, identifying the existing displayed element or elements corresponding to the location of the touch signal and noting the nature (i.e. static or dynamic) of the touch signal. In this way, different parts of an image can be associated with different user input instructions. Such a page is shown in Figures 4a and 4b according to an embodiment. In Figures 4a and 4b, touch screen 252 is again shown offset with respect to image-generating layer 250 for reasons of clarity although - in reality - they would be aligned. Some regions of the touch screen are detection zones 32, in that the touch signal resulting from touching a detection zone causes the processor 210 to carry out an instruction. Figure 4b shows shaded boxes representing detection zones 32. Dynamic touches are detectable within the detection zones 32. Other regions 34 of the touch screen may lie outside detection zones, i.e. there may be areas where either touching the screen generates no touch signal or where any touch signals generated do not result in processor 210 carrying out an operation. Detection zones 32 each contain a plurality of touch pixels (as represented at 254 in Figure 2b), the touch pixels in a given touch area being mapped as a group such that their respective touch signals are processed together to result in a specific user input instruction.

A given detection zone may be static, in that the detection zone responds to a simple touch with one or a contiguous group of touch pixels. However, a detection zone may be dynamic, in that it may respond (or may respond in a different way) to detection of movement i.e. a sequence of touches across a contiguous set of touch pixels corresponding to the user sliding a finger across the surface of touch screen 252 in one or other detection zone 32. The sliding action may be achieved by the user touching the display in a detection zone and maintaining contact with the surface of touch screen 252 whilst moving the touch, i.e. the point at which the finger touches the display and, subsequently removing the finger. In the case of a dynamic touch, the touch sensitive layer may be arranged to transmit a touch signal each time the active region (that is, the area where touch is made with the display) moves from one touch pixel to another, thereby updating the processor 210 with the current position of the active region.

A number of different but equivalent sliding motions may be detected by processor 210 as a dynamic touch. Figures 5a-5c show dynamic touch does not need to traverse the whole width of a detection zone, detection is not limited to a single direction of dynamic touch and may be diagonal, i.e.: finger may traverse the detection zone at an angle. Optionally a detection zone 32 may be customised to support multi-function slides to allow for distinctions to be established between different sorts of dynamic touch event or gesture. For example, different directions or angles of dynamic touch may be interpreted as representing different gestures, with each gesture embodying a different command. For example, slide right to left when touching the centre of a list element in order to command the device to delete the element.

The above embodiments are to be understood as illustrative examples of the invention. Further embodiments of the invention are envisaged and will be evident to the skilled reader. It is to be understood that any feature described in relation to any one embodiment may be used alone, or in combination with other features described, and may also be used in combination with one or more features of another of the embodiments, or any combination of the embodiments. Furthermore, equivalents and modifications not described above will be evident to the skilled reader and may also be employed without departing from the scope of the invention, which is defined in the accompanying claims.

As will be understood by those skilled in the art, the invention may be implemented in computer program product software, any or all of which may be contained on various storage media so that the program can be loaded onto one or more general purpose computing devices or downloaded over a network using a suitable transmission medium. The computer program product used to implement the invention may be embodied on any suitable carrier, readable by a suitable computer input device, such computer program product carrier comprising, for example, optically readable media, magnetic media or semiconductor memory. The invention may be implemented by one or more hardware computing device having one or more processors and memory storing one or more programs.

## Claims

1. A method of operating a device comprising a touch sensitive display, in which the method comprises:
detecting a touch on the touch sensitive display and detecting movement of the touch across a part of the touch sensitive display;
in response to detecting the movement of the touch, determining a first graphical element displayed on the touch sensitive display in a position corresponding to the part of the touch sensitive display across which the movement of the touch is detected;
adding a second graphical element on the touch sensitive display;
in which the position on the touch sensitive display of the second graphical element is determined in relation to the position on the touch sensitive display of the first graphical element.

2. The method of claim 1, in which the second graphical element comprises a field for data entry by a user.

3. The method of any of claims 1 and 2, in which the second graphical element is added configured to accept data input from a user.

4. The method of any of claims 1 to 3, in which the first graphical element corresponds to an item of a list of items displayed on the touch sensitive display; in which the method comprises:
detecting movement of the touch across a part of the display displaying the list of items; and
introducing a new item into the list by adding the second graphical element on the touch sensitive display.

5. The method of any of claims 1 to 4, in which the first graphical element corresponds to an item of a list of items; in which the method comprises:
introducing a new item into the list by adding the second graphical element in a position in the list determined in relation to the position of the item.

6. The method of any of claims 4 and 5 in which the list is a structured list comprising items arranged in at least two hierarchical levels; in which the method comprises introducing a new item that belongs to the same hierarchical level as the item.

7. The method of any of claims 4 and 6, comprising creating a gap between two items in the list by relocating on the display at least one of the items in the list and adding the second graphical element in the gap created.

8. The method of any of claims 4 and 6, comprising replacing with the second graphical element, at least one of the items in the list.

9. The method of any above claim in which detecting movement of the touch comprises detecting movement of the touch within a part of the display corresponding to a graphical element displayed on the display.

10. The method of claim 9 in which the graphical element within which movement of the touch is detected comprises an item in a list of items.

11. The method of any of claims 1 to 10, comprising:
displaying on the display a character selection field; detecting user input by detecting touch with at least one part of the display corresponding to the location of the character selection field; interpreting the user input as selecting at least one textual character; and displaying a corresponding character in the second graphical element.

12. A computer program stored on a computer-readable medium and comprising computer-readable instructions for performing the steps of any preceding claim.

13. A device comprising:
a touch sensitive display;
a touch-screen controller configured to detect a touch on the touch sensitive display and to detect movement across a part of the touch sensitive display of
the touch;
a display controller configured to display graphical elements on the touch sensitive display;
a processor configured to, in response to detection of movement of the touch:
determine a first graphical element displayed on the touch sensitive display in a position corresponding to the part of the touch sensitive display across which the movement of the touch is detected;
determine a position on the display for a second graphical element in relation to the position on the display of the first graphical element; and modify the display by adding the second graphical element at the determined position.

14. The device of claim 13, in which the second graphical element is configured to accept data input from a user.

15. The device of any of claims 13 and 14, in which: the first graphical element is comprised in a list of items; and
the position on the display of the second graphical element corresponds to a position in the list.

16. The device of claim 15 in which the list is a structured list comprising items arranged in at least two hierarchical levels; in which the position of the second graphical element corresponds to the same hierarchical level as the item.

17. The device of any of claims 15 and 16, in which the processor is configured to create a gap between two items in the list by relocating on the display at least one of the items in the list and to add the second graphical element in the gap.

18. The device of any of claims 15 and 16, in which the processor is configured to replace at least one item in the list with the second graphical element.
